# EUROPEAN PATENT APPLICATION

(11) **EP 3 816 820 A1**
(43) Date of publication of application: **05.05.2021**
(21) Application number: 19822464.4
(22) Date of filing: 01.04.2019
(51) Int. Cl.: G06F 16/90, A63H 11/00, G06F 16/907, G06F 16/909

(54) **INFORMATION PROCESSING DEVICE, INFORMATION PROCESSING METHOD, AND PROGRAM**

(30) Priority: 18.06.2018 JP 2018115498
(71) Applicant: Sony Corporation, 108-0075 Tokyo (JP)
(72) Inventor: HONGO, Kazuo, Tokyo 108-0075 (JP); KASAI, Takara, Tokyo 108-0075 (JP); KIMURA, Ryota, Tokyo 108-0075 (JP); MATSUDA, Hiroki, Tokyo 108-0075 (JP)
(74) Representative: D Young & Co LLP
(86) International application number: PCT/JP2019/014445
(87) International publication number: WO 2019/244434

(57) **Abstract**

[Problem] To derive a reliable answer from answers to the question received from a plurality of robot devices. [Solution] An information processing device includes, a weight management unit that determines, with respect to an answer to a question obtained from each of a plurality of respondent robots that have received the question and meta information of the answer, weighting of the answer based on the meta information of the answer, and a final answer determination unit that derives, based on the weighting of the answer, a final answer to the question from the respective answers from the plurality of respondent robots. [Selected Drawing] FIG. 1

## Description

### Field

The present disclosure relates to an information processing device, an information processing method, and a program.

### Background

In recent years, robot devices, which are mechanical devices that mimic the behavior of living creatures using electrical or magnetic action, have become widespread. For example, manipulator devices and the like for the purpose of automating production work are widely used in factories.

On the other hand, in various scenes of daily life, the development of a robot device that supports human activities as a human partner is under way. Unlike the industrial robot device that repeats a certain operation, such a robot device is required to have the ability to flexibly adapt to various aspects of the human living environment.

For example, such a robot device is required to learn by itself how to operate various objects existing in the human living environment. However, autonomous learning by a robot device generally takes time. Therefore, it is considered to improve the learning efficiency of the robot device by sharing information with other robot devices existing around the robot device and increasing the amount of information.

For example, the following Patent Literature 1 discloses a method of appropriately managing information in a robot device that shares information with other robot devices using a communication function. According to the technique disclosed in Patent Literature 1, it is possible to determine the newness of shared information by counting the number of generations as information is transferred.

### Citation List

### Patent Literature

Patent Literature 1: JP 2005-279830 A

### Summary

### Technical Problem

Here, in order for the robot device to determine how to operate an unknown object based on the information obtained from other robot devices through communication, it is important to sort out the acquired information with reasonable weighting. However, the technique disclosed in Patent Literature 1 cannot determine reliability of the shared information.

For this reason, when the answer to the question is received from a plurality of robot devices, there has been a demand for an information processing device capable of deriving a reliable answer by properly weighting the answers to the questions.

### Solution to Problem

According to the present disclosure, an information processing device is provided. The information processing device includes a weight management unit that determines, with respect to an answer to a question obtained from each of a plurality of respondent robots that have received the question and meta information of the answer, weighting of the answer based on the meta information of the answer, and a final answer determination unit that derives, based on the weighting of the answer, a final answer to the question from the respective answers from the plurality of respondent robots.

Moreover, according to the present disclosure, an information processing method is provided. The information processing method includes, by an arithmetic unit, determining, with respect to an answer to a question obtained from each of a plurality of respondent robots that have received the question and meta information of the answer, weighting of the answer based on the meta information of the answer, and deriving, based on the weighting of the answer, a final answer to the question from the respective answers from the plurality of respondent robots.

Moreover, according to the present disclosure, a program is provided. The program causes a computer to function as a weight management unit that determines, with respect to an answer to a question obtained from each of a plurality of respondent robots that have received the question and meta information of the answer, weighting of the answer based on the meta information of the answer, and a final answer determination unit that derives, based on the weighting of the answer, a final answer to the question from the respective answers from the plurality of respondent robots.

According to this disclosure, it is possible to weight the answers based on the similarity between the respondent robot and the questioner robot, the proficiency level of the respondent robot with the object, or the amount of learning experience of the respondent robot, etc. by using the meta information of the answer.

### Advantageous Effects of Invention

As described above, according to the present disclosure, it is possible to derive a reliable answer by appropriately weighting a plurality of answers to a question.

Note that the above-described effect is not necessarily restrictive, and any one of effects described in the present specification or any another effect obtainable from the present specification may be exhibited in addition to or in place of the above-described effect.

### Brief Description of Drawings

FIG. 1 is an explanatory diagram illustrating that a question is transmitted from a robot 1 to each of robots 3.
FIG. 2 is an explanatory diagram illustrating that an answer to a question is transmitted from each of the robots 3 to which the question is transmitted to the robot 1.
FIG. 3 is an explanatory diagram illustrating an overall flow of a technique according to an embodiment of the present disclosure.
FIG. 4 is a block diagram illustrating an example of a functional configuration of an information processing device 10 according to the same embodiment.
FIG. 5 is a flowchart illustrating a flow of an operation of the information processing device 10 according to the same embodiment.
FIG. 6 is a sequence diagram illustrating an interaction between the information processing device 10 and a robot device 30 according to the same embodiment.
FIG. 7 is an explanatory diagram illustrating that an answer from each of the respondent robots 3 is transmitted to an information processing device 11 in a modification.
FIG. 8 is an explanatory diagram illustrating that a robot 12 newly participating in a network 40 accesses the information processing device 11 in the modification.
FIG. 9 is an explanatory diagram illustrating an example of information stored in a database storage unit 100 of the information processing device 11 in the modification.
FIG. 10 is a block diagram illustrating an example of a hardware configuration of the information processing device 10 according to the same embodiment.

### Description of Embodiments

Hereinafter, preferred embodiments of the present disclosure will be described in detail with reference to the accompanying drawings. Note that, in the present specification and drawings, redundant description of a configuration element having substantially the same functional configuration is omitted by providing the same sign.

The description will be given in the following order.
1. Embodiment
1.1. Overview
1.2. Configuration of information processing device
1.3. Operation of information processing device
2. Modification
3. Hardware configuration
4. Summary

### <1. Embodiment>

### (1.1. Overview)

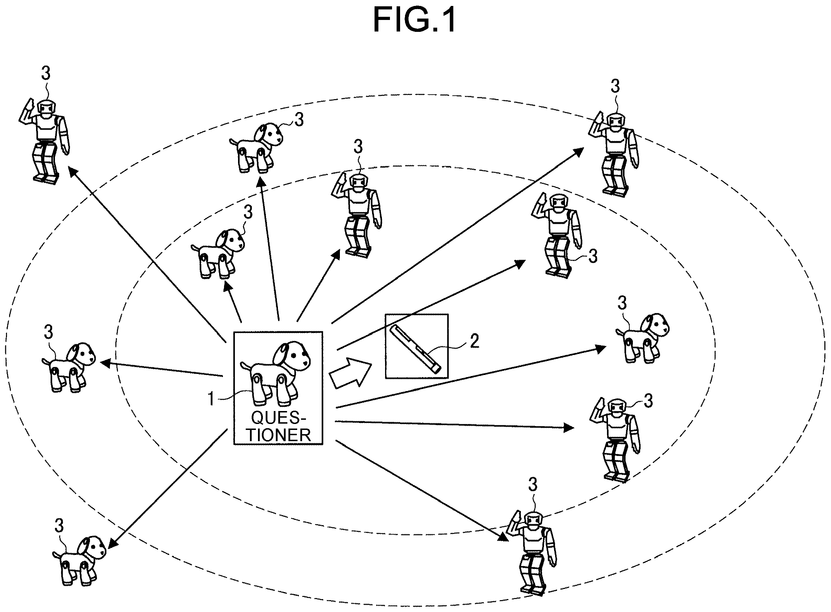

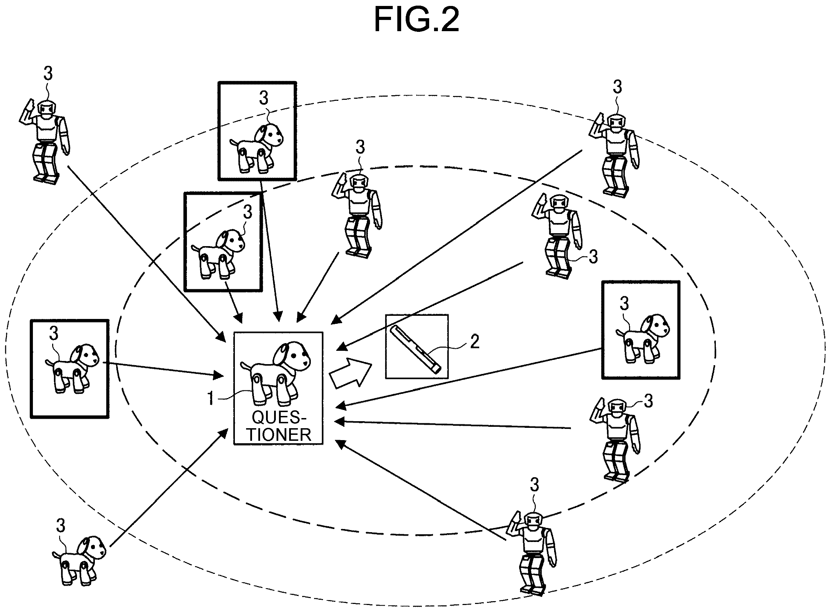

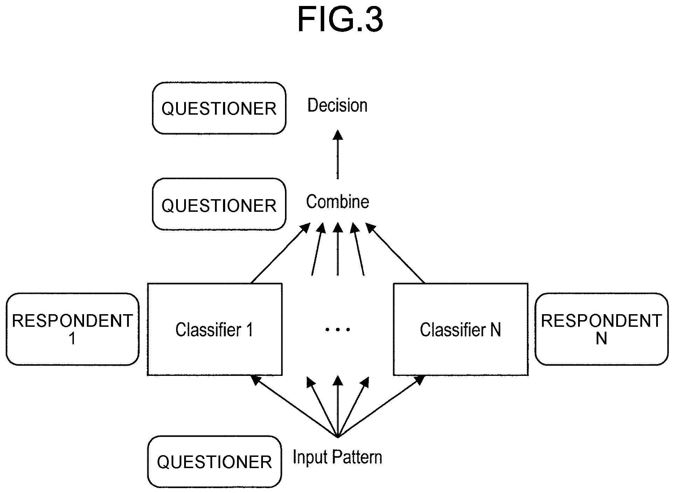

First, an overview of a technique according to an embodiment of the present disclosure will be described with reference to FIGS. 1 to 3. FIG. 1 is an explanatory diagram illustrating that a question is transmitted from a robot 1 to robots 3. FIG. 2 is an explanatory diagram illustrating that an answer to the question is transmitted from each of the robots 3 to which the question is transmitted to the robot 1. FIG. 3 is an explanatory diagram illustrating the overall flow of the technique according to the present embodiment.

As illustrated in FIG. 1, when the robot 1 recognizes an object 2 that is unknown to it, the robot 1 (hereinafter, also referred to as a questioner robot 1) transmits a question related to the object 2 to other robots 3 (hereinafter, also referred to as respondent robots 3) that exist around it.

When the questioner robot 1 encounters the object 2 unknown to itself, the questioner robot 1 does not know the name of the object 2 or how to handle it. For this reason, in order to have the respondent robots 3 that know the object 2 teach the name of the object 2 or how to handle it, the questioner robot 1 transmits a question related to the object 2 to the respondent robots 3 that exist around it. According to this, the questioner robot 1 can learn the name of the object 2 or the method of handling the object 2 in a time shorter than a time when the questioner robot 1 learns how to handle the object 2 by itself or is taught it by the user.

Specifically, in various scenes of daily life, a robot device that supports human activities as a human partner may encounter various unknown objects 2. For example, there are things in the world that have exactly the same appearance but have completely different applications, as exemplified by pens and laser pointers. Therefore, when an elongated rod-shaped unknown object exists in the house of another person, it is difficult for the robot device to determine whether the unknown object is a pen or a laser pointer. Further, when the robot device moves to an unknown country or area due to the user moving or the like, the robot device may encounter an unknown object whose application or the like is difficult to determine from the appearance. In addition, in the user's home, there may be a unique object created by the user, etc. The robot device cannot know how to handle such a unique object even when it refers to any of the databases and the like.

Therefore, the questioner robot 1 transmits a question related to the object 2 that is unknown to it to a plurality of respondent robots 3 that exists in the vicinity to obtain information about the unknown object 2 before handling the unknown object 2 carelessly.

In FIGS. 1 and 2, the object 2 has a shape, but the present embodiment is not limited to this example. The object 2 may have no shape such as the internal space of a predetermined room. The object 2 may or may not have a shape as long as the questioner robot 1 can exert some action.

After that, as illustrated in FIG. 2, the respective respondent robots 3 that have received the question generate answers to the question related to the object 2 and transmit them to the questioner robot 1. The questioner robot 1 derives a final answer to the question by weighting each of the plurality of received answers. Specifically, the questioner robot 1 determines, based on the weighting, the most valid or reliable answer from among the plurality of answers received, and may regard the determined answer as the final answer to the question.

Here, the questioner robot 1 receives answers to the question from the plurality of respondent robots 3, but the answers from the plurality of respondent robots 3 cannot be the same. This is because the answers from the respondent robots 3 are generated based on the learning experiences of the respective respondent robots 3 or the like. Therefore, the answers from the respondent robots 3 have different likelihoods.

Therefore, the questioner robot 1 can determine an answer with higher validity or reliability by weighting each of the plurality of received answers more easily. It should be noted that the weighting of the plurality of received answers is performed based on the meta information of the answers received together with the answers.

For example, the questioner robot 1 may derive a final answer to the question by giving greater weighting to the answer from the respondent robot 3 whose distance from the object 2 is within a certain range. In such a case, the meta information of the answer will include information about the distance between the object 2 and the respondent robot 3. The respondent robot 3 that is closer to the object 2 is more likely to have detailed information about the object 2 than the respondent robot 3 that is farther from the object 2. For this reason, the questioner robot 1 can determine an answer with higher reliability more easily from among the plurality of answers received by giving greater weighting to the answer from the respondent robot 3 which is closer to the object 2.

Further, the questioner robot 1 may derive a final answer to the question by giving greater weighting to an answer from the respondent robot 3 having a shape or type similar to that of the questioner robot 1. In such a case, the meta information of the answer will include the information about the shape or type of the respondent robot 3. The respondent robot 3 similar to the questioner robot 1 is more likely to have information suitable for the questioner robot 1 with respect to how to handle the object 2 or the sense of distance from the object 2 than the respondent robot 3 different from the questioner robot 1. For this reason, the questioner robot 1 can determine the answer suitable for itself more easily from among the plurality of received answers by giving greater weighting to the answer from the respondent robot 3 similar to the questioner robot 1.

Specifically, the technique according to the present embodiment is executed according to the flow illustrated in FIG. 3.

First, a question about the object 2, together with meta information including an image of the object 2 and the like, is transmitted from the questioner robot 1 to the surrounding respondent robots 3. The respondent robot 3 inputs meta information including an image of object 2 into respective classifiers (Classifier 1 to Classifier N) (Input Pattern) to classify the object 2 and generate the answer to the question. After that, the respondent robot 3 transmits the generated answer and meta information to the questioner robot 1.

The questioner robot 1 that receives the answer and the meta information from each of the respondent robots 3 combines each of the received answers by weighting each of the answers based on the meta information of the answer. Next, the questioner robot 1 makes a decision of the final answer to the question from the received answers by considering the weighting of each answer. Thus, the questioner robot 1 can determine what the unknown object 2 is by using the classifier of the respondent robot 3. Therefore, the questioner robot 1 can appropriately handle the object 2 in a shorter time without performing autonomous learning or the like on the unknown object 2 through trial and error.

### (1.2. Configuration of information processing device)

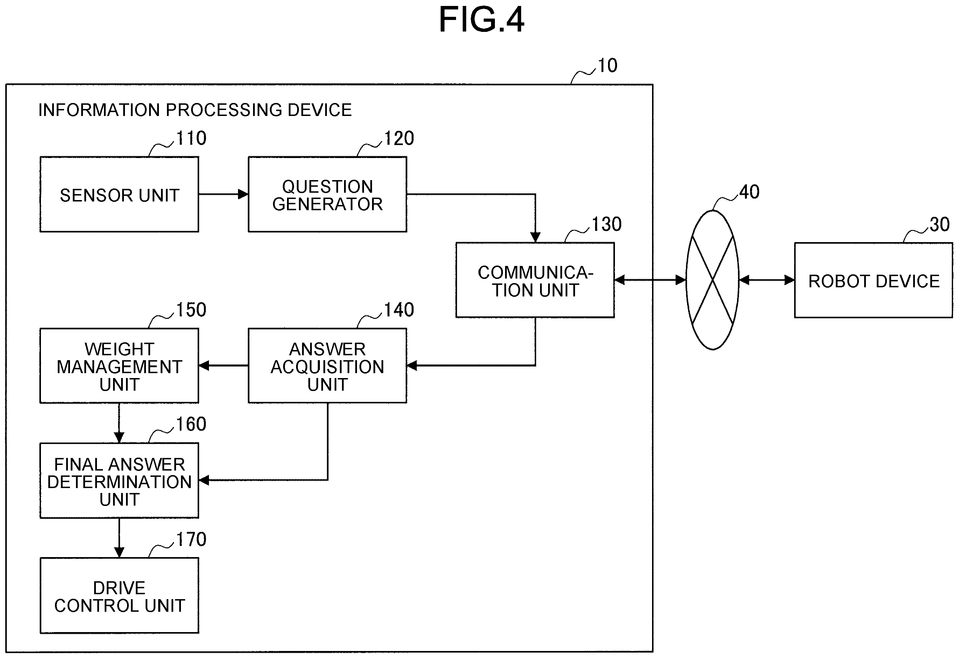

Next, an example of a functional configuration of the information processing device according to the present embodiment will be described with reference to FIG. 4. FIG. 4 is a block diagram illustrating an example of the functional configuration of an information processing device 10 according to the present embodiment. The information processing device 10 according to the present embodiment may be mounted on the questioner robot 1 illustrated in FIGS. 1 and 2, for example.

As illustrated in FIG. 4, the information processing device 10 includes a sensor unit 110, a question generator 120, a communication unit 130, an answer acquisition unit 140, a weight management unit 150, a final answer determination unit 160, and a drive control unit 170. The information processing device 10 communicates with a robot device 30 (corresponding to the respondent robot 3 illustrated in FIGS. 1 and 2) via a network 40 by the communication unit 130.

The sensor unit 110 includes various known sensors and measures the state of the external environment including the object 2. The sensor unit 110 may include various cameras such as an RGB camera, a grayscale camera, a stereo camera, a depth camera, an infrared camera, or a time of flight (ToF) camera, or may include various range sensors such as a laser imaging detection and ranging (LIDAR) sensor, or a radio detecting and ranging (RADAR) sensor, or may include a microphone, an illuminance meter, a pressure meter, a thermometer, a hygrometer, or the like.

The question generator 120 generates a question to be transmitted to the robot device 30. Specifically, the question generator 120 generates a question related to the object 2 and meta information of the question. The object 2 is an unknown object for the questioner robot 1 on which the information processing device 10 is mounted. Therefore, the question generator 120 generates a question asking what the object 2 is and how to handle it. For example, the question generator 120 may generate a question asking about any of a structure, an application, a name, a gripping method, or an operating method of the object 2.

The meta information of the question includes information for allowing the robot device 30 that has received the question to specify the object 2. For example, the meta information of the question may include information about the object 2 such as image information of the image of the object 2, color and shape information of the object 2, position information of the object 2, sound information picked up from the object 2, or odor information measured from the object 2. These pieces of information about the object 2 may be acquired by the sensor unit 110, for example. The information about the object 2 may be information that can be acquired without contacting the object 2. In such a case, the sensor unit 110 can reduce the influence on the object 2 when acquiring the information about the object 2.

Also, the meta information of the question may include information about the purpose of the question. The clearer the purpose of the question, the more accurately the robot device 30 to which the question is transmitted can generate an answer that matches the answer requested by the information processing device 10. According to this, the information processing device 10 can receive a more appropriate answer.

Further, the meta information of the question may include a one-time password. When the meta information of the question includes a one-time password, the information processing device 10 can construct a system in which the answer can be transmitted from one robot device 30 only once.

It is considered that the information processing device 10 can derive the final answer with higher validity and reliability to the question by receiving answers from each of the larger number of robot devices 30. Therefore, the same answer being transmitted from one robot device 30 a plurality of times can be a disturbing factor in deriving the final answer to the question. Therefore, it is preferable that the information processing device 10 use the one-time password or the like to limit the answer from the robot device 30 to only one answer. When a robot device 30 that transmits the same answer a plurality of times is found in a case where the one-time password is not used, the information processing device 10 may exclude the answer from the robot device 30 to derive the final answer to the question.

The communication unit 130 is a communication interface that transmits a question to and receives an answer from the robot device 30.

For example, the communication unit 130 may transmit a question to and receive an answer from the robot device 30 via the network 40. The network 40 may be a public communication network such as the Internet, a satellite communication network, or a telephone line network, or may be a communication network provided in a limited area such as a local area network (LAN) or a wide area network (WAN).

For example, the communication unit 130 may directly transmit a question to and receive an answer from the robot device 30. In such a case, the communication unit 130 includes an antenna and a communication circuit, and wirelessly communicates with the robot device 30. For example, the communication unit 130 may use communication with signals in the band of several hundred MHz to several GHz (for example, 920 MHz) such as Wi-Fi (registered trademark), ZigBee (registered trademark), Bluetooth (registered trademark), Bluetooth Low Energy (registered trademark), ANT (registered trademark), ANT+ (registered trademark), or the EnOcean Alliance (registered trademark) to perform wireless communication with the robot device 30.

The robot device 30 receives a question from the information processing device 10, and transmits an answer to the received question and meta information of the answer to the information processing device 10. The robot device 30 corresponds to the respondent robot 3 illustrated in FIGS. 1 and 2. The robot device 30 generates the answer to the received question and the meta information of the answer based on the information about the object 2 included in the meta information of the question.

Specifically, the robot device 30 may input the image information of the object 2 included in the meta information of the question into the classifier or the learning device of the robot device 30 to generate an answer to the question received. For example, the robot device 30 may generate an answer to a question of what the object 2 is or what kind of operation method is supposed for the object 2. Especially when the robot device 30 uses its own learning device to generate the answer to the question, the learning device reflects the data learned in the past by each of the robot devices 30, so that it is more likely that different answers can be obtained for respective robot devices 30.

The robot device 30 generates meta information of the answer. The meta information of the answer includes at least one of information about the robot device 30 and information about the relationship between the robot device 30 and the object 2.

For example, the meta information of the answer may include, as information about the robot device 30, information about a structure, a year of development, a model, an arm or leg structure, a stay period, a manufacturer, an operation system (OS) version, or a software version of the robot device 30. When the meta information of the answer includes information about the robot device 30, the information processing device 10 can determine the similarity between the questioner robot 1 on which the information processing device 10 is mounted and the robot device 30. According to this, the information processing device 10 can determine whether the answer received from the robot device 30 is an answer suitable for itself.

In addition, the meta information of the answer may include, as information about the relationship between the robot device 30 and the object 2, information about the last use date, the last viewing date, the number of uses, or the frequency of use of the object 2 by the robot device 30, or the distance between the robot device 30 and the object 2. When the meta information of the answer includes the information about the relationship between the robot device 30 and the object 2, the information processing device 10 can determine the frequency with which the robot device 30 handles the object 2 or the like. According to this, the information processing device 10 can determine whether the answer received from the robot device 30 is highly reliable.

In addition, the meta information of the answer may include the frequency with which the user asks the robot device 30 about the object 2, the frequency with which another questioner robot 1 asks the robot device 30 about the object 2, the likelihood of the answer expected by the robot device 30, information about the communication path between the information processing device 10 and the robot device 30, or the like. The more kinds of information included in the meta information of the answer, the more detailed weighting the weight management unit 150 described later can perform.

The meta information of the answer preferably includes information that makes the difference for each robot device 30 that transmits the answer clear. The meta information of the answer is used by the weight management unit 150 described later, to determine the weight of each answer. Therefore, the more the meta information of the answer includes the information that makes the difference for each robot device 30 clear, more different weighting the weight management unit 150 described later, can give to the answer for each robot device 30.

Note that the robot device 30 may request the information processing device 10 or the questioner robot 1 to additionally transmit meta information when information is insufficient to generate an answer to the question.

The answer acquisition unit 140 acquires the answer to the question and the meta information of the answer from each of the plurality of robot devices 30 via the communication unit 130. The answer acquisition unit 140 outputs the meta information of the answer to the weight management unit 150 to output the answer to the question to the final answer determination unit 160. With this, the information processing device 10 can derive the final answer to the question by collecting the answers to the question while considering the weight determined based on the meta information of the answer.

The weight management unit 150 determines weighting of the answer based on the meta information of the answer. For example, the weight management unit 150 may determine the weighting of the answer based on one type of information of the meta information of the answer.

Specifically, the weight management unit 150 may determine the weighting of each of the answers received from the robot devices 30 based on the distance between the object 2 and each of the robot devices 30. For example, the weight management unit 150 may determine the weighting so that the answer received from the robot device 30 that is closer to the object 2 has a greater weight. This is because there is a high possibility that the robot device 30 that is closer to the object 2 grasps the object 2 more accurately or handles the object 2 more frequently, and the received answer is considered to be highly reliable. According to this, the weight management unit 150 can determine the weighting of the answer so that the higher the reliability is, the greater weight the answer has.

In addition, the weight management unit 150 may determine the weighting of each of the answers received from the robot devices 30 based on the degree of structural similarity between the questioner robot 1 on which the information processing device 10 is mounted and the robot device 30. For example, the weight management unit 150 may determine the weighting so that the answer received from the robot device 30 having a higher degree of structural similarity to the questioner robot 1 has a greater weight. This is because there is a possibility that the similar behavior may not be possible when the structure of the robot device is different. For example, there is a possibility that while some robot devices can grip the object 2 with a plurality of arms, other robot devices cannot grip the object 2 because they have only one arm. Therefore, by giving a greater weight to the answer received from the robot device 30 which has a higher degree of structural similarity to the questioner robot 1, the information processing device 10 can make the final answer more suitable for the questioner robot 1.

In addition, the weight management unit 150 may determine the weighting of each of the answers received from the robot devices 30 based on the degree of software matching between the questioner robot 1 on which the information processing device 10 is mounted and the robot device 30. For example, the weight management unit 150 may determine the weighting so that the answer received from the robot device 30 having a higher degree of software matching to the questioner robot 1 has a greater weight. This is because when the software of the robot device is different, even if the structure is similar, there is a possibility that the same action or the action with the same accuracy cannot be performed. For example, there is a possibility that the precision movement to the object 2 that can be performed by one robot device cannot be performed by another robot device with the same precision. Therefore, the answer received from the robot device 30 which has a higher degree of software matching to the questioner robot 1 is made to have a greater weight, so that the information processing device 10 can make the final answer more suitable for the questioner robot 1.

Further, the weight management unit 150 may determine the weighting of each answer received from the robot device 30 based on the length of the stay period of the robot device 30 in the region where the object 2 exists. For example, the weight management unit 150 may determine the weighting so that the answer received from the robot device 30 that has stayed in the region where the object 2 exists for a longer time has a greater weight. This is because there is a high possibility that the robot device 30 that has stayed in the region where the object 2 exists for a longer time grasps the object 2 more accurately or handles the object 2 more frequently, and the received answer is considered to be highly reliable. According to this, the weight management unit 150 can determine the weighting of the answer so that the higher the reliability is, the greater weight the answer has.

Further, the weight management unit 150 may determine the weighting of the answer for a plurality of types of information among the meta information of the answer, and count the plurality of types of weights determined to determine the weighting of the answer. For example, the weight management unit 150 may weight the answer based on each piece of information shown in Table 1 below and count the weighted weight for each answer to determine the weight of the answer. In Table 1 below, "-" indicates that there is no corresponding state.

**Table 1**

| Weighting | 0.2 | 0.4 | 0.6 | 0.8 | 1.0 |
|---|---|---|---|---|---|
| Distance to object 2 | Within 500 m | Within 300 m | Within 100 m | Within 50 m | Within 20 m |
| Stay period of robot device 30 | One day | 10 Days | One month | Six months | One year |
| Elapsed time since robot device 30 has used object 2 | One year | Six months | One month | 10 Days | One day |
| Arm structures of questioner robot 1 and robot device 30 | Another structure | - | Similar structure | Different type | Same |
| Movement structures of questioner robot 1 and robot device 30 | Another structure | - | Similar structure | Different type | Same |
| Software of questioner robot 1 and robot device 30 | Another software | - | Similar software | Version difference | Same |

According to this, since the weight management unit 150 can evaluate the weight of the answer from a plurality of viewpoints, it is possible to determine the weighting more finely for each robot device 30 that has transmitted the answer.

At this time, the weight management unit 150 may change the magnitude of the weight between the important information for weighting and the less important information used as a reference of the meta information of the answer. Specifically, the weight management unit 150 may make the amount of variation in weight large for important information for deriving a final answer with high reliability from the received answer, and may make the amount of variation in weight small for less important information. According to this, since the weight management unit 150 can give greater weighting to the answers with higher reliability or validity, the final answer determination unit 160 can obtain a final answer with higher reliability or validity.

Furthermore, the weight management unit 150 may determine the weighting of each of the answers received from the robot devices 30 based on the external data. Specifically, the weight management unit 150 may determine the weighting of each of the answers received from the robot device 30 based on the knowledge amount of the robot device 30 or the external data with respect to the reliability of the action. For example, the weight management unit 150 may determine the weighting so that the answer received from the robot device 30 with higher reliability has a larger weight based on information such as a database that collects the degree of the learning progress of the robot device 30, a database that collects the operating hours of the robot device 30, or a database that collects the task success rate of the robot device 30. By weighting the answers using such external data, the weight management unit 150 improves the reliability of the final answer, and can improve the validity of the final answer for the questioner robot 1.

The final answer determination unit 160 derives the final answer to the question from the received answer based on the weighting of the answer by the weight management unit 150. Specifically, the final answer determination unit 160 may derive the final answer by collecting the answers of the same content and taking a majority decision in consideration of weighting.

In addition, the final answer determination unit 160 may derive the final answer to the question using only the answer received from the robot device 30 existing within a certain distance from the object 2. In addition, instead of the distance from the object 2, the final answer determination unit 160 may derive the final answer to the question using only the answer received from the robot device 30 existing in a specific range such as in the same building, in the same floor, or in the same store area.

In addition, the final answer determination unit 160 may derive the final answer to the question using only the answer received from the robot device 30 having the same or similar structure. Specifically, the traversing performance, the shape of the hand, the movable range of the arm, and the like of the robot device are important factors for the manipulation of the object 2. For this reason, the final answer determination unit 160 can determine information more suitable for the questioner robot 1 as the final answer by using only the answer received from the robot device 30 having the same or similar structures.

The drive control unit 170 controls the behavior of the questioner robot 1 on which the information processing device 10 is mounted. Specifically, the drive control unit 170 controls the drive of each motor provided in each joint of the questioner robot 1 to control the overall behavior of the questioner robot 1. Further, the drive control unit 170 may control the drive of various modules such as a speaker, a projector, a display, or a light emitter (for example, a light bulb, an LED, a laser, etc.) provided in the questioner robot 1 for the output to the user. For example, the drive control unit 170 may control the behavior of the questioner robot 1 so as to operate the object 2 which is known or whose method of handling is known by the final answer to the question.

### (1.3. Operation of information processing device)

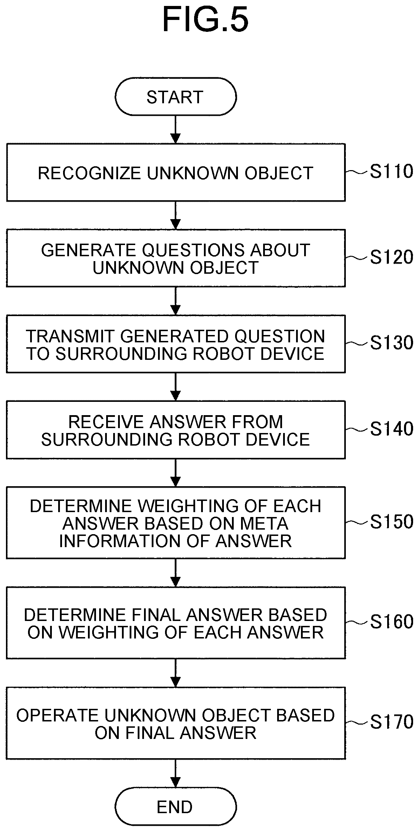

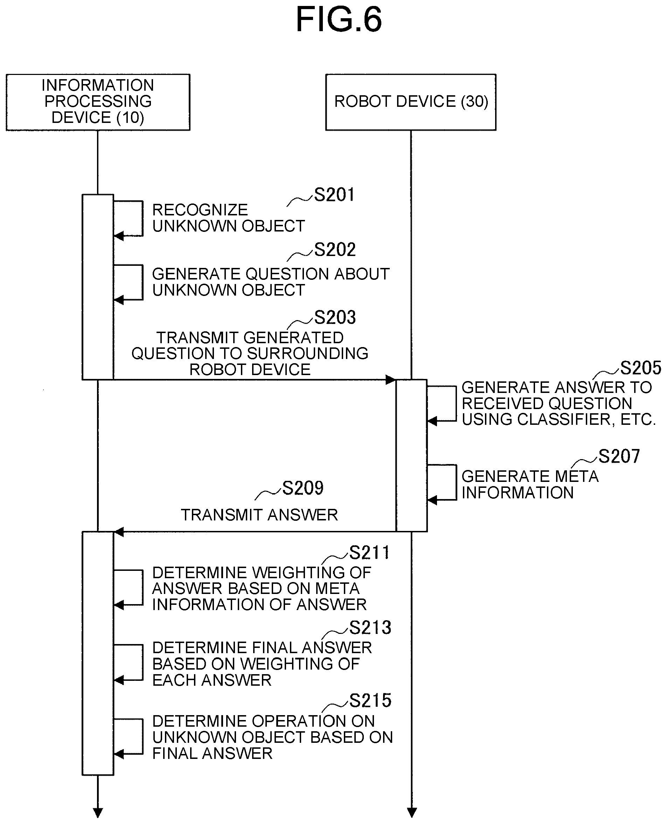

Next, the operation of the information processing device 10 according to the present embodiment will be described with reference to FIGS. 5 and 6.

First, the flow of the operation of the information processing device 10 will be described with reference to FIG. 5. FIG. 5 is a flowchart illustrating a flow of the operation of the information processing device 10 according to the present embodiment.

As illustrated in FIG. 5, first, the information processing device 10 recognizes the unknown object 2 by the sensor unit 110 (S110). Subsequently, the question generator 120 generates a question related to the unknown object 2 (S120). At this time, the question generator 120 may generate the meta information of the question including the information allowing the robot device 30 that has received the question to identify the object 2.

Next, the question generated by the question generator 120, together with the meta information, is transmitted to the surrounding robot device 30 (S130). Afterwards, the answer to the question is returned from each of the surrounding robot devices 30 to which the question is transmitted, and the information processing device 10 receives the answer to the question and the meta information of the answer from each of the robot devices 30 (S140).

Subsequently, the weight management unit 150 determines weighting of each answer based on the meta information of the answer (S150). Specifically, the weight management unit 150 weights each answer to reflect its reliability or validity based on the information about the robot device 30 included in the meta information of the answer, the information about the relationship between the robot device 30 and the object 2, or the like. Next, the final answer determination unit 160 derives the final answer to the question based on the weighting of each answer (S160). Specifically, the final answer determination unit 160 may derive the final answer by considering the weighting of each answer and collecting a plurality of answers having the same content to make a majority decision. According to this, the questioner robot 1 on which the information processing device 10 is mounted can recognize the unknown object 2 as a known object according to the final answer, so that it is possible to operate the object 2 properly (S170).

Next, with reference to FIG. 6, the interaction between the information processing device 10 according to the present embodiment and the robot device 30 will be described. FIG. 6 is a sequence diagram illustrating the interaction between the information processing device 10 according to the present embodiment and the robot device 30.

As illustrated in FIG. 6, first, the information processing device 10 recognizes the unknown object 2 by the sensor unit 110 (S201). Subsequently, the question generator 120 generates a question related to the unknown object 2 (S202). At this time, the question generator 120 may generate meta information including information for identifying the object 2. After that, the question generated by the question generator 120 and the meta information are transmitted to the surrounding robot devices 30 (S203).

Next, the robot device 30 that has received the question generates an answer to the received question using a classifier or the like (S205). Subsequently, the robot device 30 generates the meta information of the answer, used for weighting the answer in the information processing device 10 (S207). After that, the answer to the question and the meta information are transmitted to the information processing device 10 (S209).

Subsequently, in the information processing device 10 that has received the answer from each of the plurality of robot devices 30, the weight management unit 150 determines weighting of each answer based on the meta information of each answer (S211). Next, the final answer determination unit 160 determines the final answer to the question based on the weighting of each answer (S213). According to this, the questioner robot 1 on which the information processing device 10 is mounted can recognize the object 2 as a known object according to the final answer, so that it is possible to operate the object 2 properly (S215).

According to the above operation example, the information processing device 10 can determine what the unknown object 2 is and how to handle the unknown object 2 based on the answer from the surrounding robot devices 30.

### <2. Modification>

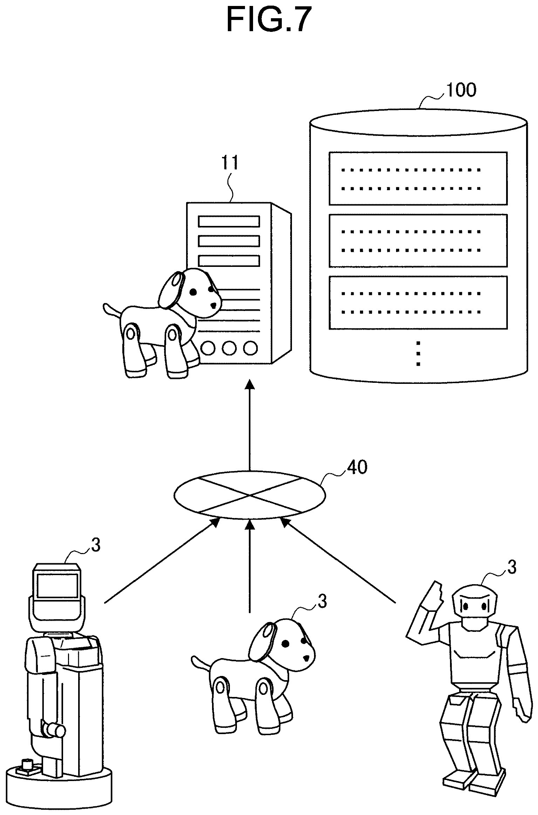

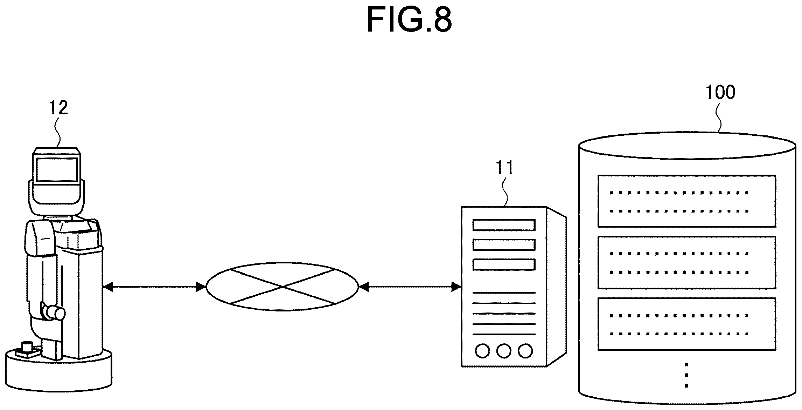

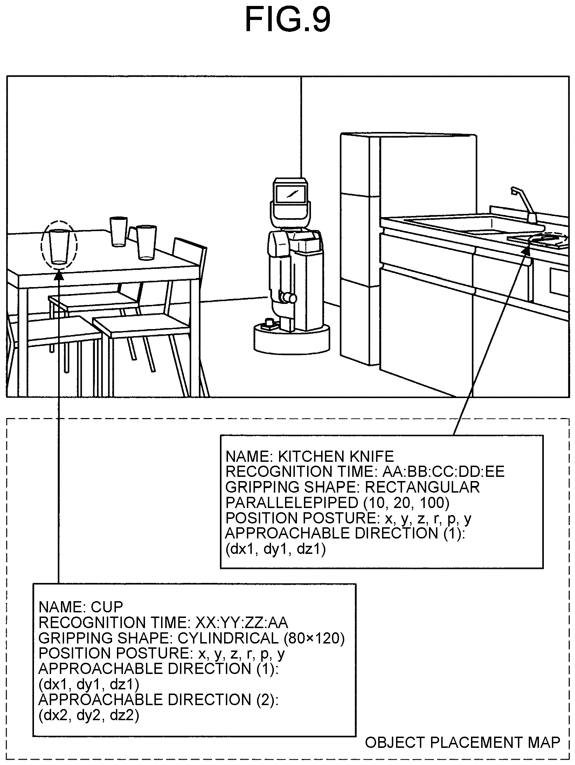

Subsequently, a modification of the information processing device according to the present embodiment will be described with reference to FIGS. 7 to 9. FIG. 7 is an explanatory diagram illustrating that an answer from the respondent robot 3 is transmitted to an information processing device 11. FIG. 8 is an explanatory diagram illustrating that a robot 12 newly joining the network 40 accesses the information processing device 11. FIG. 9 is an explanatory diagram illustrating an example of information stored in a database storage unit 100 of the information processing device 11.

As illustrated in FIG. 7, the information processing device 11 according to the present modification includes the database storage unit 100 that stores a question and a final answer to the question in association with each other. The information processing device 11 is provided independently of the questioner robot 1 or the respondent robot 3. That is, the information processing device 11 according to present modification can be freely accessed from the robot device connected to the network 40, and differs from the information processing device 10 described in FIG. 3 in that it is not mounted on the robot device but is provided independently.

Specifically, the information processing device 11 may receive, from each of the questioner robots 1, the question and the final answer derived from the answer received from the respondent robot 3, and may store them in the database storage unit 100.

Alternatively, when the question is transmitted from the questioner robot 1 to the respondent robot 3, the information processing device 11 may receive the answer and the meta information of the answer to generate a final answer to the question. After that, the information processing device 11 may store the question and the final answer in the database storage unit 100, and may transmit the generated final answer to the questioner robot 1.

The information processing device 11 according to present modification centrally manages each of the questions sent by the questioner robot 1 and the final answer to each question, so that the question and the final answer to the question can be shared between robots connected to the network 40.

For example, when recognizing the unknown object 2, the questioner robot 1 transmits a question related to the object 2 to the information processing device 11. When the final answer to the question transmitted from the questioner robot 1 is stored in the information processing device 11, the information processing device 11 transmits the final answer to the received question to the questioner robot 1. According to this, the information processing device 11 can prevent the same question from being repeatedly transmitted from different questioner robots 1.

On the other hand, when the final answer to the question transmitted from the questioner robot 1 is not stored in the information processing device 11, the questioner robot 1 transmits the answer to the surrounding respondent robots 3 to generate the final answer based on the answers from respondent robot 3. After that, the questioner robot 1 can update the database of the information processing device 11 by transmitting the question and the final answer to the information processing device 11. That is, the information processing device 11 can update the accumulated information by accepting the latest information at any time. For example, the information processing device 11 may store a combination of a new question and the final answer in the database storage unit 100 to update the stored information.

Further, the information processing device 11 may delete the combination of the question and the final answer, which is determined to have low reliability from the database storage unit 100. The reliability of the information can be determined, for example, by receiving feedback related to the usefulness of the information from the questioner robot 1 that has referred to the information. For example, when receiving a feedback indicating that the usefulness of the information is low from the plurality of questioner robots 1 that has referred to the information, the information processing device 11 may delete the information.

Here, as illustrated in FIG. 8, a case where the robot 12 newly joins the network 40 will be described. The robot 12 recognizes the existence and address of the information processing device 11 when the existence and address of the information processing device 11 are answered at the time of transmitting a question to the surrounding robot device. Since the information processing device 11 can be freely accessed via the network 40, the robot 12 can access the information processing device 11 to use the information stored in the database storage unit 100 of the information processing device 11.

However, at the beginning of participation, the information processing device 11 allows the robot 12 that has newly joined network 40 to access only information with a low security level, and restricts the robot 12 to access information with a high security level such as passwords. After that, the information processing device 11 may permit the robot 12 to access the information with a high security level stepwise as the stay period of the robot 12 increases.

Also, at the beginning of participation, the information processing device 11 allows the robot 12 that has newly joined the network 40 only to read information to the information processing device 11, and may not allow addition or update of the combination of the question and the final answer to the information processing device 11. After that, the information processing device 11 may allow the robot 12 to add a combination of a question and a final answer as the stay period of the robot 12 increases.

The information processing device 11 according to the present modification can store a database in which the recognition information of each of the objects 2 is accumulated by accumulating the question about each of the object 2 and the final answer. For example, as illustrated in FIG. 9, the database storage unit 100 may store map information indicating the location of the object 2 indoors. Further, the database storage unit 100 may store information including the name, gripping shape, position posture, and approachable direction of each object 2 in association with each position information of the object 2. The information processing device 11 stores the map information of such an object arrangement in the database storage unit 100, thereby storing the question about object 2 and the final answer in a format that is easy for another robot device to use.

### <3. Hardware configuration>

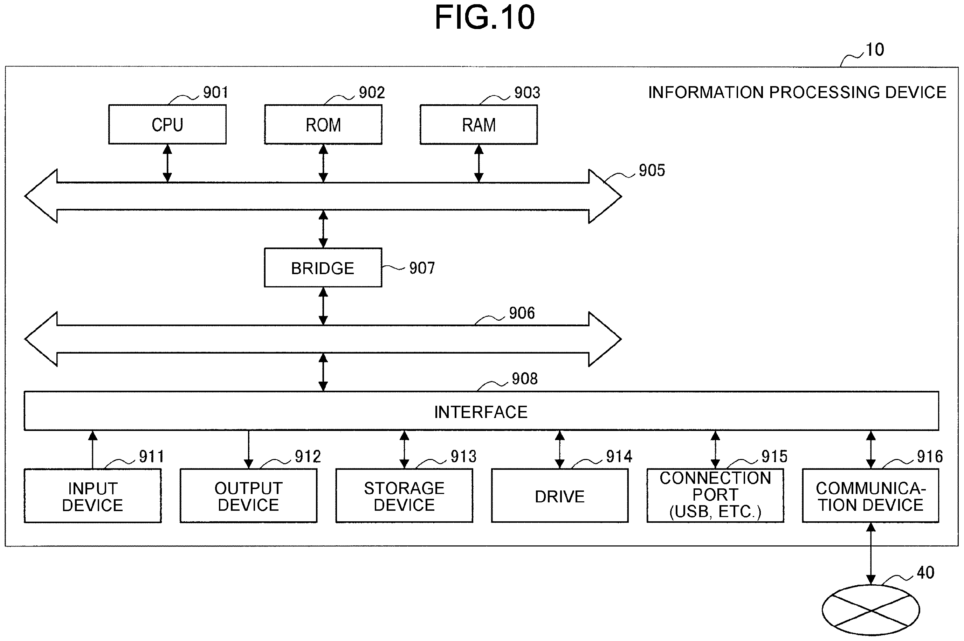

Furthermore, the hardware configuration of the information processing device 10 according to the present embodiment will be described with reference to FIG. 10. FIG. 10 is a block diagram illustrating a hardware configuration example of the information processing device 10 according to the present embodiment.

As illustrated in FIG. 10, the information processing device 10 includes a central processing unit (CPU) 901, a read only memory (ROM) 902, a random access memory (RAM) 903, a bridge 907, an internal buses 905 and 906, an interface 908, an input device 911, an output device 912, a storage device 913, a drive 914, a connection port 915, and a communication device 916.

The CPU 901 functions as an arithmetic processing device, and controls the overall operation of the information processing device 10 according to various programs stored in the ROM 902 or the like. The ROM 902 stores a program and an arithmetic parameter used by the CPU 901, and the RAM 903 temporarily stores the program used in the execution of the CPU 901, parameters that change appropriately in the execution, and the like. For example, the CPU 901 may execute the functions of the question generator 120, the answer acquisition unit 140, the weight management unit 150, and the final answer determination unit 160.

The CPU 901, the ROM 902, and the RAM 903 are mutually connected by the bridge 907, the internal buses 905 and 906, and the like. The CPU 901, the ROM 902, and the RAM 903 are also connected to the input device 911, the output device 912, the storage device 913, the drive 914, the connection port 915, and the communication device 916 via the interface 908.

The input device 911 includes an input device such as a touch panel, a keyboard, a mouse, a button, a microphone, a switch, or a lever for inputting information. The input device 911 also includes an input control circuit that generates an input signal based on the input information and outputs the input signal to the CPU 901.

The output device 912 includes a display device such as, for example, a cathode ray tube (CRT) display device, a liquid crystal display device, or an organic electro luminescence (EL) display device. Further, the output device 912 may include an audio output device such as a speaker or headphones.

The storage device 913 is a storage device for storing data of the information processing device 10. The storage device 913 may include a storage medium, a storage device that stores data in the storage medium, a reading device that reads data from the storage medium, and a deletion device that deletes the stored data.

The drive 914 is a reader/writer for a storage medium and is built in or externally attached to the information processing device 10. For example, the drive 914 reads out information stored in a removable storage medium such as a mounted magnetic disk, optical disk, magneto-optical disk, or semiconductor memory to output it to the RAM 903. The drive 914 can also write information to a removable storage medium.

The connection port 915 is, for example, a connection interface composed of a connection port for connecting an external connection device such as a Universal Serial Bus (USB) port, an Ethernet (registered trademark) port, an IEEE 802.11 standard port, and an optical audio terminal.

The communication device 916 is, for example, a communication interface composed of a communication device or the like for connection to the network 40. The communication device 916 may be a wired or wireless LAN compatible communication device or a cable communication device that performs cable communication by wire. The communication device 916 may perform the function of the communication unit 130, for example.

It is also possible to create a computer program causing hardware such as the CPU, the ROM, and the RAM built into the information processing device 10 to exert the same functions as each configuration of the control device according to the above-described embodiment. It is also possible to provide a storage medium storing the computer program.

### <4. Summary>

As explained above according to the information processing device 10 according to the present embodiment, it is possible to determine the effective action on the unknown object 2 in a short time by transmitting a question related to the unknown object 2 to the surrounding robot device 30, and receiving the answer to the question from the surrounding robot device 30.

Further, according to the information processing device 10 according to the present embodiment, it is possible to derive a final answer with higher reliability or validity from the received answer by weighting each of the answers based on the meta information of the answer.

The preferred embodiments of the present disclosure have been described in detail with reference to the accompanying drawings, but the technical scope of the present disclosure is not limited to such examples. It is obvious that those skilled in the art in the technical field of the present disclosure can find various revisions and modifications within the scope of a technical concept described in claims, and it should be understood that these revisions and modifications will also be naturally come under the technical scope of the present disclosure.

For example, the information processing device 10 may perform the weighting of each of the answers and the derivation of the final answer from the answers using machine learning. Specifically, the information processing device 10 may include a machine learning type classifier that inputs the answers received from the plurality of robot devices 30 and the meta information of the answers to output the final answer to the question.

Furthermore, the effects described in the present specification are merely illustrative or exemplified effects, and are not limitative. That is, the technology according to the present disclosure can accomplish other effects apparent to those skilled in the art from the description of the present specification, in addition to or instead of the effects described above.

Note that the following configurations also belong to the technical scope of the present disclosure.
(1) An information processing device comprising:
   a weight management unit that determines, with respect to an answer to a question obtained from each of a plurality of respondent robots that have received the question and meta information of the answer, weighting of the answer based on the meta information of the answer; and
   a final answer determination unit that derives, based on the weighting of the answer, a final answer to the question from the respective answers from the plurality of respondent robots.
(2) The information processing device according to (1), wherein the question, together with meta information of the question, is transmitted from a questioner robot to each of the plurality of respondent robots.
(3) The information processing device according to (2), wherein the question is a question related to an object recognized by the questioner robot.
(4) The information processing device according to (3), wherein the meta information of the question includes at least information about the object.
(5) The information processing device according to (4), wherein the information about the object is information obtained without contacting the object.
(6) The information processing device according to any one of (3) to (5), wherein the answer to the question is acquired one by one from each of the plurality of respondent robots.
(7) The information processing device according to any one of (3) to (6), wherein the answer to the question is generated by each of the plurality of respondent robots using a classifier.
(8) The information processing device according to any one of (3) to (7), wherein the meta information of the answer includes at least one of information about each of the respondent robots and information about a relationship between each of the respondent robots and the object.
(9) The information processing device according to any one of (3) to (8), wherein the weight management unit determines weighting of each of the answers based on a distance between the object and each of the respondent robots.
(10) The information processing device according to any one of (3) to (9), wherein the weight management unit determines weighting of each of the answers based on a degree of structural similarity between the questioner robot and each of the respondent robots.
(11) The information processing device according to any one of (3) to (10), wherein the weight management unit determines weighting of each of the answers based on a degree of software matching between the questioner robot and each of the respondent robots.
(12) The information processing device according to any one of (3) to (11), wherein the weight management unit determines weighting of each of the answers based on a length of a stay period of each of the respondent robots in a region where the object exists.
(13) The information processing device according to any one of (1) to (12), wherein the final answer determination unit determines, based on weighting of each of the answers, that an answer with high validity as an answer to the question among the plurality of answers is a final answer.
(14) The information processing device according to any one of (3) to (12), wherein the questioner robot is a robot capable of operating the object.
(15) The information processing device according to (14), wherein the final answer is used for controlling an operation of the object by the questioner robot.
(16) The information processing device according to (14), wherein the information processing device is mounted on the questioner robot.
(17) The information processing device according to any one of (1) to (16), further comprising a database storage unit that stores the question and the final answer to the question in association with each other, wherein the database storage unit is provided so as to be accessible from another robot.
(18) The information processing device according to (17), wherein the final answer stored in the database storage unit is kept or deleted based on feedback from the another robot that has referred to the final answer.
(19) An information processing method comprising:
   by an arithmetic unit
   determining, with respect to an answer to a question obtained from each of a plurality of respondent robots that have received the question and meta information of the answer, weighting of the answer based on the meta information of the answer; and
   deriving, based on the weighting of the answer, a final answer to the question from the respective answers from the plurality of respondent robots.
(20) A program causing a computer to function as
   a weight management unit that determines, with respect to an answer to a question obtained from each of a plurality of respondent robots that have received the question and meta information of the answer, weighting of the answer based on the meta information of the answer; and
   a final answer determination unit that derives, based on the weighting of the answer, a final answer to the question from the respective answers from the plurality of respondent robots.

### Reference Signs List

- 1: QUESTIONER ROBOT
- 2: OBJECT
- 3: RESPONDENT ROBOT
- 10: INFORMATION PROCESSING DEVICE
- 30: ROBOT DEVICE
- 40: NETWORK
- 100: DATABASE STORAGE UNIT
- 110: SENSOR UNIT
- 120: QUESTION GENERATOR
- 130: COMMUNICATIONS UNIT
- 140: ANSWER ACQUISITION UNIT
- 150: MANAGEMENT UNIT
- 160: FINAL ANSWER DETERMINATION UNIT
- 170: DRIVE CONTROL UNIT

## Claims

1. An information processing device comprising:
a weight management unit that determines, with respect to an answer to a question obtained from each of a plurality of respondent robots that have received the question and meta information of the answer, weighting of the answer based on the meta information of the answer; and
a final answer determination unit that derives, based on the weighting of the answer, a final answer to the question from the respective answers from the plurality of respondent robots.

2. The information processing device according to claim 1, wherein the question, together with meta information of the question, is transmitted from a questioner robot to each of the plurality of respondent robots.

3. The information processing device according to claim 2, wherein the question is a question related to an object recognized by the questioner robot.

4. The information processing device according to claim 3, wherein the meta information of the question includes at least information about the object.

5. The information processing device according to claim 4, wherein the information about the object is information obtained without contacting the object.

6. The information processing device according to claim 1, wherein the answer to the question is acquired one by one from each of the plurality of respondent robots.

7. The information processing device according to claim 1, wherein the answer to the question is generated by each of the plurality of respondent robots using a classifier.

8. The information processing device according to claim 3, wherein the meta information of the answer includes at least one of information about each of the respondent robots and information about a relationship between each of the respondent robots and the object.

9. The information processing device according to claim 3, wherein the weight management unit determines weighting of each of the answers based on a distance between the object and each of the respondent robots.

10. The information processing device according to claim 3, wherein the weight management unit determines weighting of each of the answers based on a degree of structural similarity between the questioner robot and each of the respondent robots.

11. The information processing device according to claim 3, wherein the weight management unit determines weighting of each of the answers based on a degree of software matching between the questioner robot and each of the respondent robots.

12. The information processing device according to claim 3, wherein the weight management unit determines weighting of each of the answers based on a length of a stay period of each of the respondent robots in a region where the object exists.

13. The information processing device according to claim 1, wherein the final answer determination unit determines, based on weighting of each of the answers, that an answer with high validity as an answer to the question among the plurality of answers is a final answer.

14. The information processing device according to claim 3, wherein the questioner robot is a robot capable of operating the object.

15. The information processing device according to claim 14, wherein the final answer is used for controlling an operation of the object by the questioner robot.

16. The information processing device according to claim 14, wherein the information processing device is mounted on the questioner robot.

17. The information processing device according to claim 1, further comprising a database storage unit that stores the question and the final answer to the question in association with each other, wherein the database storage unit is provided so as to be accessible from another robot.

18. The information processing device according to claim 17, wherein the final answer stored in the database storage unit is kept or deleted based on feedback from the another robot that has referred to the final answer.

19. An information processing method comprising:
by an arithmetic unit
determining, with respect to an answer to a question obtained from each of a plurality of respondent robots that have received the question and meta information of the answer, weighting of the answer based on the meta information of the answer; and
deriving, based on the weighting of the answer, a final answer to the question from the respective answers from the plurality of respondent robots.

20. A program causing a computer to function as
a weight management unit that determines, with respect to an answer to a question obtained from each of a plurality of respondent robots that have received the question and meta information of the answer, weighting of the answer based on the meta information of the answer; and
a final answer determination unit that derives, based on the weighting of the answer, a final answer to the question from the respective answers from the plurality of respondent robots.
